# EUROPEAN PATENT APPLICATION

(11) **EP 2 693 333 A1**
(43) Date of publication of application: **05.02.2014**
(21) Application number: 12765299.8
(22) Date of filing: 24.02.2012
(51) Int. Cl.: G06F 9/38, G06F 12/08

(54) **PROCESSOR AND INSTRUCTION PROCESSING METHOD THEREOF**

(30) Priority: 31.03.2011 JP 2011078561
(71) Applicant: Renesas Electronics Corporation, Kawasaki-shi, Kanagawa 211-8668 (JP)
(72) Inventor: NAGAO, Tsuyoshi, Kawasaki-shi Kanagawa 211-8668 (JP); SATO, Junichi, Kawasaki-shi Kanagawa 211-8668 (JP)
(74) Representative: Glawe, Delfs, Moll
(86) International application number: PCT/JP2012/001276
(87) International publication number: WO 2012/132214

(57) **Abstract**

Provided are a processor and an instruction processing method of the processor, with which it is possible to increase an instruction execution rate. A processor 1 includes a BTAC 12 that stores branch target information of a branch instruction and boundary information indicating that the branch instruction is on a fetch line boundary, a branch prediction unit 13 that performs branch prediction of a variable-length instruction set including the branch instruction by referring to the BTAC 12, and a fetch unit 14 that fetches an instruction based on the branch prediction result. The branch prediction unit 13 refers to the BTAC 12, and when the boundary information is present in the instruction which the branch prediction unit 13 makes the fetch unit 14 fetch, the branch prediction unit 13 makes the fetch unit 14 fetch the following next fetch line as well and then makes the fetch unit 14 fetch a branch prediction target instruction according to the branch target information.

## Description

### Technical Field

The present invention relates to a processor that is able to simultaneously fetch a plurality of instructions at one time and includes a variable-length instruction set and an instruction processing method of the processor, and more particularly, to a processor that includes a variable-length instruction set and is capable of performing branch prediction and an instruction processing method of the processor.

### Background Art

It is important in a high-speed technique by pipeline processing in a microprocessor to execute instructions continuously (without causing a hazard). In a conditional branch instruction, for example, it is impossible to know whether a condition is satisfied and a branch is taken or the branch is not taken unless the instruction is actually executed, which requires to stall the flow of the pipeline. This is called a control hazard.

The branch prediction is a function of a processor that eliminates influences of the control hazard. The execution which is predicted at the branch prediction is speculatively started, and in a case in which the predicted result is correct, the execution is continued. In a case in which the predicted result is incorrect, all the results of the instructions executed after the conditional branch instruction are discarded.

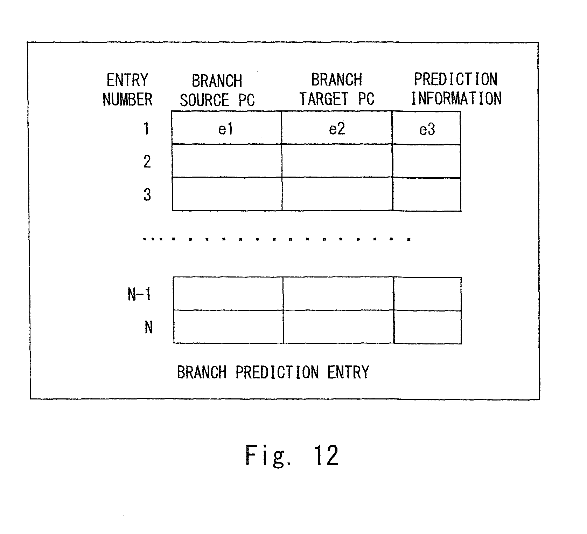

In a typical branch prediction technique, the branch instruction that is executed once and whose result is taken is stored in a storage area (branch target address cache (BTAC)). Fig. 12 is a diagram showing a configuration of the BTAC.

As shown in Fig. 12, information registered in the BTAC includes a program counter (PC) of a conditional branch instruction that is executed (branch source PC) (e1), a PC of a branch target (e2), and prediction information (e3). The PC (e1) of the conditional branch instruction that is executed is registered to know whether a branch instruction was previously executed when the branch instruction is executed. The PC of the branch target is information that is required to fetch a branch target instruction of a branch instruction in advance. The prediction information is information indicating, based on information as to whether or not the branch instruction that is registered was previously taken, whether or not the branch instruction will be taken next time.

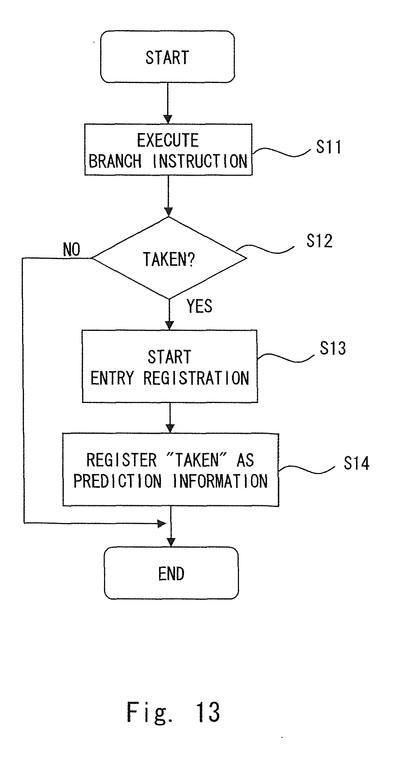

Fig. 13 is a flowchart showing an operation of storing information in the BTAC. As shown in Fig. 13, the branch instruction is executed first (Step S11). Next, it is checked whether the branch instruction that is executed is taken or not (Step S12). When the branch instruction is taken, registration in the BTAC is started (Step S13). The number "1" indicating the branch instruction being taken is registered, for example, as the prediction information (e3) (Step S14).

As a related art, for example, Patent literature 1 discloses storing an indication of the last granularity (end) of a taken branch instruction in a branch target address cache (BTAC) in a variable-length instruction set. This technique saves BTAC space and improves performance by eliminating the necessity of calculating where to begin flushing.

Fig. 14 is a functional block diagram showing a processor disclosed in Patent literature 1. As shown in Fig. 14, a processor 110 includes an instruction unit 112 and one or more execution units 114. The instruction unit 112 fetches instructions from an instruction cache 116, with memory address translation and permissions managed by an instruction-side Translation Lookaside Buffer (ITLB) 118.

The execution units 114 execute instructions dispatched by the instruction unit 112. The execution units 114 read and write information from and to a general purpose register (GPR) 120 and access data from a data cache 122, with memory address translation and permissions managed by a main Translation Lookaside Buffer (TLB) 124. The data cache 122 is connected to an L2 cache 126 and the L2 cache 126 is connected to an external memory 128 through a bus interface unit.

The instruction unit 112 includes a fetch stage 132 and a decode stage 136 of pipeline. The decode stage 136 decodes retrieved instructions. The instruction unit 112 further includes an instruction queue 138 to store instructions decoded by the decode stage 136, and an instruction allocation unit 140 to dispatch queued instructions to the appropriate execution units 114.

A branch prediction unit (BPU) 142 predicts branch of conditional branch instructions. Instruction addresses in the fetch stage 132 are provided to a branch target address cache (BTAC) 144 and a branch history table (BHT) 146 in parallel with instruction fetches from the instruction cache 116. An address hit in the BTAC 144 indicates a branch instruction that was previously taken, and the BTAC 144 provides the branch target address of the branch instruction. The BHT 146 maintains branch prediction records indicating whether known branches have previously taken or not taken. The BPU 142 executes branch prediction based on hit/miss information from the BTAC 144 and the branch history information from the BHT 146.

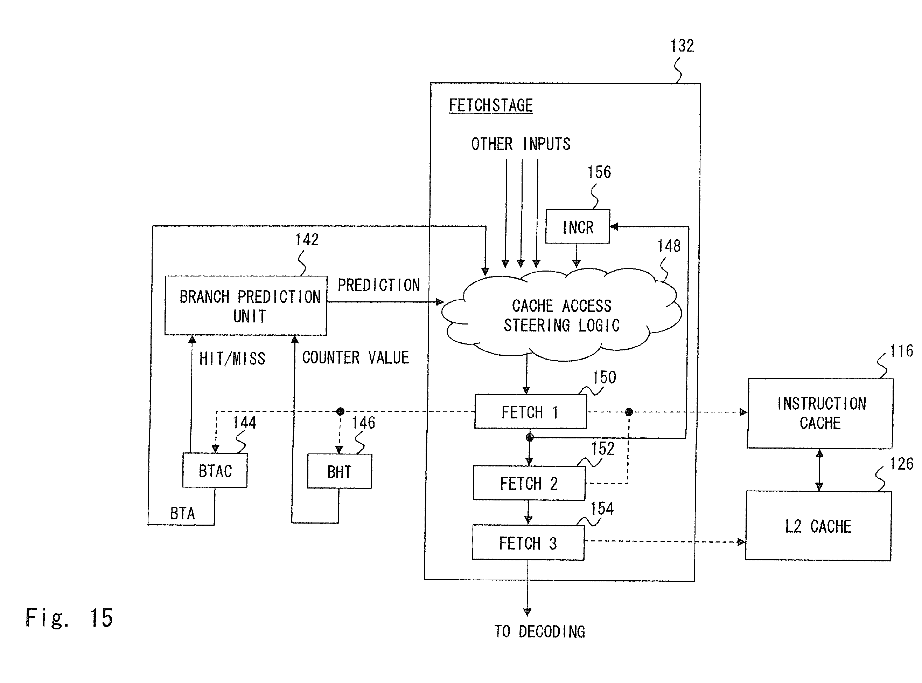

Fig. 15 is a functional block diagram showing the fetch stage 132 and the branch prediction unit (BPU) 142 of the instruction unit 112 in more detail. The fetch stage 132 includes a cache access steering logic 148 that selects instruction addresses from a variety of sources. Further, the instruction fetch pipeline includes three stages: a fetch 1 stage 150, a fetch 2 stage 152, and a fetch 3 stage 154.

The fetch 1 stage 150 and the fetch 2 stage 152 perform simultaneous accesses to the instruction cache 116, the BTAC 144, and the BHT 146. An instruction address in the fetch 1 stage 150 ascertains whether instructions associated with the address are resident in the instruction cache 116. The instruction address further accesses the instruction cache 116 and the BTAC 144 during a first cache access cycle to ascertain whether a branch instruction is associated with the instruction address via a hit or miss in the BTAC 144. In the following second cache access cycle, the instruction address moves to the fetch 2 stage 152, and instructions are available from the instruction cache 116 if the instruction address hit in the cache 116, and a branch target address (BTA) is available from the BTAC 144 if the instruction address hit in the BTAC 144. If the instruction address misses in the instruction cache 116, it proceeds to the fetch 3 stage 154 to launch an L2 cache 126 access. The instructions fetched at the fetch 3 stage 154 are passed to the decode stage 136.

### Citation List

### Patent Literature

**Patent literature 1:** Published Japanese Translation of PCT International Publication for Patent Application, No. 2010-501913

### Summary of Invention

### Technical Problem

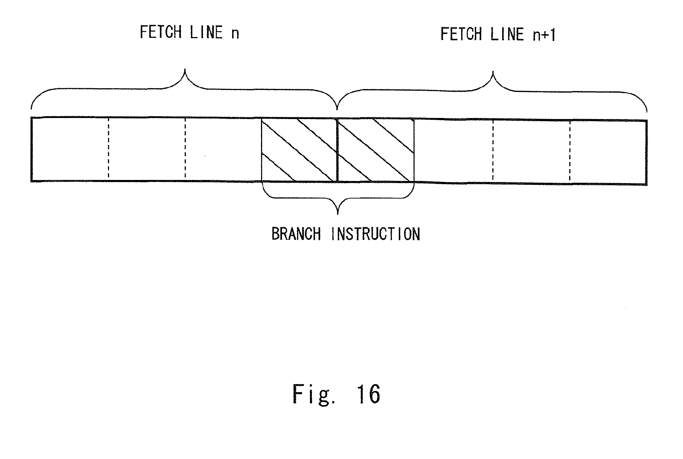

While there is no case in which an instruction is present on a fetch line boundary in a processor that processes a fixed-length instruction set, there is a possibility that a branch instruction is present on a fetch line boundary in a variable-length instruction set. Fig. 16 is a diagram showing an example in which a branch instruction is present on a fetch line boundary. That the branch instruction is present on a fetch line boundary means, as shown in Fig. 16, a part of a lower side of one branch instruction is present at the end of the first fetch line n (hereinafter referred to as a former fetch line) and the rest of the parts of the branch instruction exist at the top position of the next fetch line n+1 (hereinafter referred to as a latter fetch line).

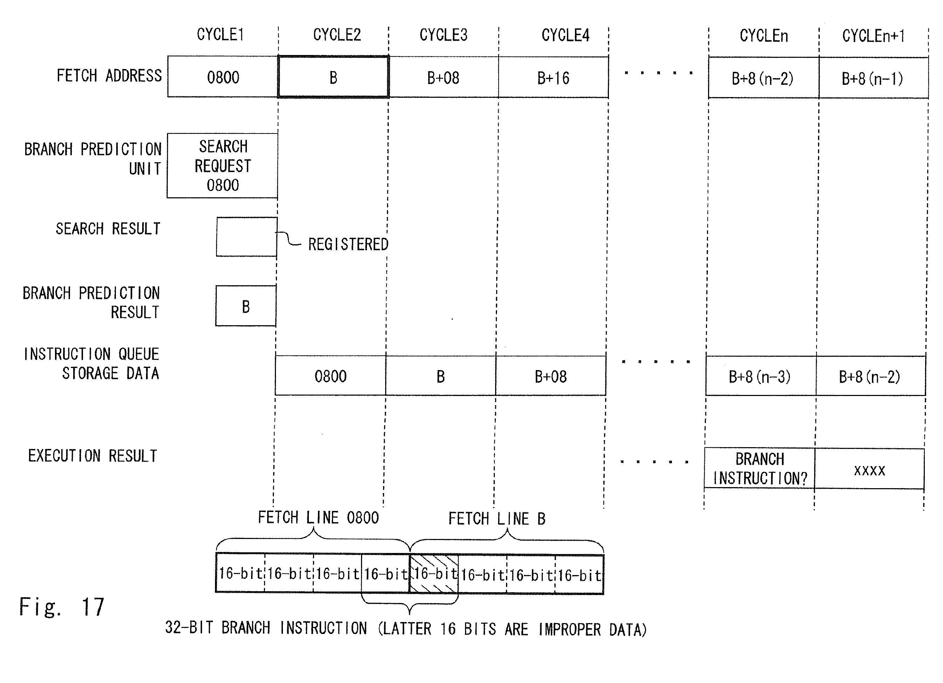

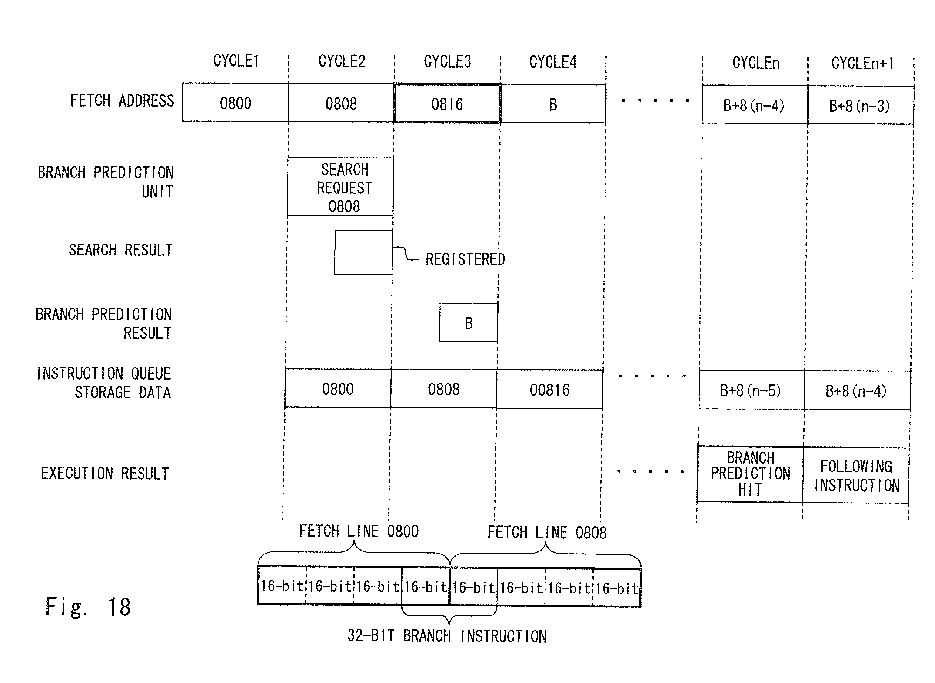

In this case, if the branch prediction is performed according to the former fetch line, the branch target is immediately fetched in the next fetch. In such a case, it is impossible to read out a part of the branch instruction which is present in the latter fetch line. Specifically, since the instruction has not been decoded yet at a stage at which the former fetch line is fetched, it is impossible to know whether the target branch instruction is present on the fetch line boundary. Therefore, it is impossible to determine which of the latter fetch line or the branch target fetch line will be fetched in the next fetch (see Fig. 17). In order to avoid such a situation, when there is a possibility that the branch instruction crosses a fetch line, it is always required to fetch the following fetch line. Accordingly, in a related art, it is impossible to perform branch prediction until when the latter fetch line is fetched. This causes a problem that one cycle penalty occurs to fetch the branch target (see Fig. 18).

### Solution to Problem

A processor according to the present invention is a processor that executes a variable-length instruction set including a branch instruction, including: a branch information table that stores branch target information of a branch instruction and boundary information indicating that the branch instruction is on a fetch line boundary;
a branch prediction unit that performs branch prediction of a variable-length instruction set including the branch instruction by refering to the branch information table; and a fetch unit that fetches an instruction based on a result of the branch prediction, wherein the branch prediction unit refers to the branch information table, and when the instruction fetched by the fetch unit includes the boundary information, the branch prediction unit makes the fetch unit fetch the following next fetch line as well and then makes the fetch unit fetch a branch prediction target instruction according to the branch target information.

An instruction processing method of a processor according to the present invention is an instruction processing method of a processor that executes a variable-length instruction set including a branch instruction, the method including: a branch prediction process that performs branch prediction of variable-length instruction set including branch instruction by referring to a branch information table, the branch information table storing branch target information of the branch instruction and boundary information indicating that the branch instruction is on a fetch line boundary; and a fetch process that fetches an instruction based on a result of the branch prediction, wherein in the branch prediction process, the branch information table is referred, and when the instruction fetched at the fetch process includes the boundary information, the following next fetch line is also fetched and then a branch prediction target instruction is fetched according to the branch target information.

According to the present invention, since boundary information indicating that the branch instruction is on the fetch line boundary is included, when an instruction to be fetched by the fetch unit includes boundary information, the branch prediction unit is able to make the fetch unit fetch the following next fetch line as well and then make the fetch unit fetch the branch prediction target according to the branch target information. It is therefore possible to read out the latter fetch line even when the branch prediction is associated with the former fetch line. It is therefore possible to correctly decode the branch instruction and to execute branch prediction at an early timing.

### Advantageous Effects of Invention

According to the present invention, it is possible to provide a processor and an instruction processing method of the processor, with which it is possible to increase an instruction execution rate.

### Brief Description of Drawings

Fig. 1 is a diagram showing a processor according to a first embodiment of the present invention;
Fig. 2A is a diagram showing a case in which a branch instruction is present on a fetch line boundary;
Fig. 2B is a diagram showing a case in which a branch instruction is present on a fetch line boundary;
Fig. 2C is a diagram showing a case in which a branch instruction is present on a fetch line boundary;
Fig. 3 is a diagram showing a BTAC 12 (branch target address cache) according to the first embodiment of the present invention;
Fig. 4 is a flowchart showing a method of registering information in the BTAC 12 according to the first embodiment of the present invention;
Fig. 5 is a diagram showing an operation when an instruction is fetched, executed, and then registered in the BTAC 12 at cycles 1 to n+1 in the processor according to the first embodiment of the present invention;
Fig. 6 is a diagram showing a registration example in the BTAC 12 according to the first embodiment of the present invention;
Fig. 7 is a diagram showing one example of state transitions of prediction information;
Fig. 8 is a diagram showing an operation of a case in which there is registration in the BTAC 12 and a branch prediction is hit;
Fig. 9 is a diagram showing an operation of a case in which there is registration in the BTAC 12 and the branch prediction is missed;
Fig. 10 is a diagram showing an operation of a case in which there is registration in the BTAC 12, QC information is included, and a branch instruction is on a fetch line;
Fig. 11 is a diagram showing an operation of a case in which a branch instruction is present on a fetch line boundary and it is possible to search the BTAC 12 at a high speed;
Fig. 12 is a diagram showing a configuration of a related BTAC;
Fig. 13 is a flowchart showing an operation of storing information in the related BTAC;

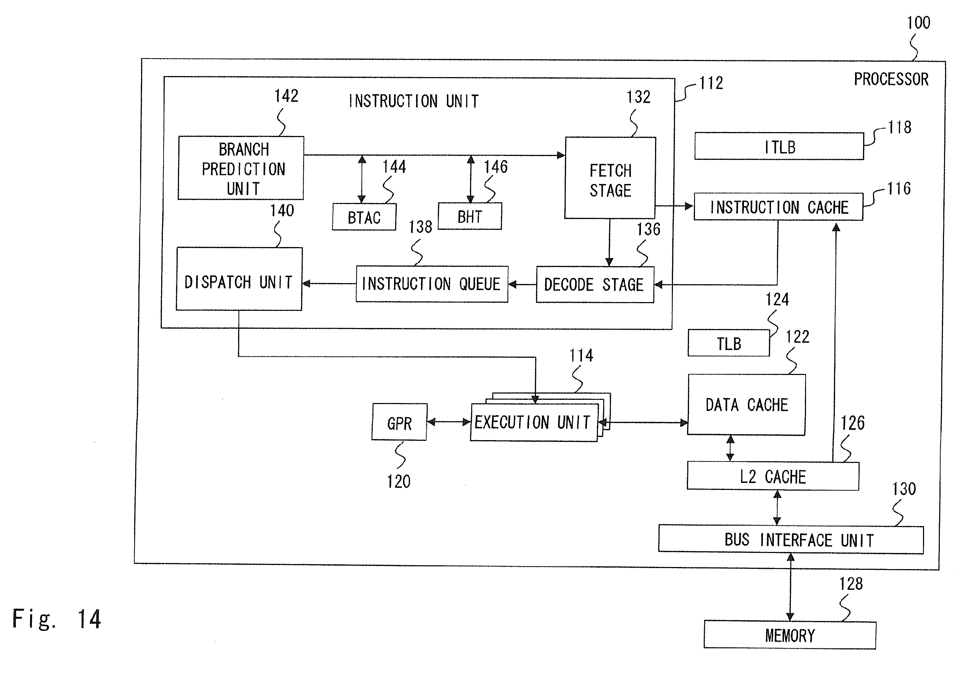

Fig. 14 is a functional block diagram showing a processor disclosed in Patent literature 1;
Fig. 15 is a functional block diagram showing a fetch stage and a branch prediction unit of an instruction unit disclosed in Patent literature 1 in more detail;
Fig. 16 is a diagram showing an example in which a branch instruction is present on a fetch line boundary;
Fig. 17 is a diagram for describing a problem in a related art, and shows a case in which a branch instruction is on a fetch line boundary and branch prediction is associated with a former fetch line; and
Fig. 18 is a diagram for describing a problem in a related art, and shows a case in which a branch instruction is on a fetch line boundary and branch prediction is associated with a latter fetch line.

### Description of Embodiments

Hereinafter, with reference to the drawings, a specific embodiment of the present invention will be described in detail. In this embodiment, the present invention is applied to a processor that processes a variable-length instruction set including a conditional branch instruction.

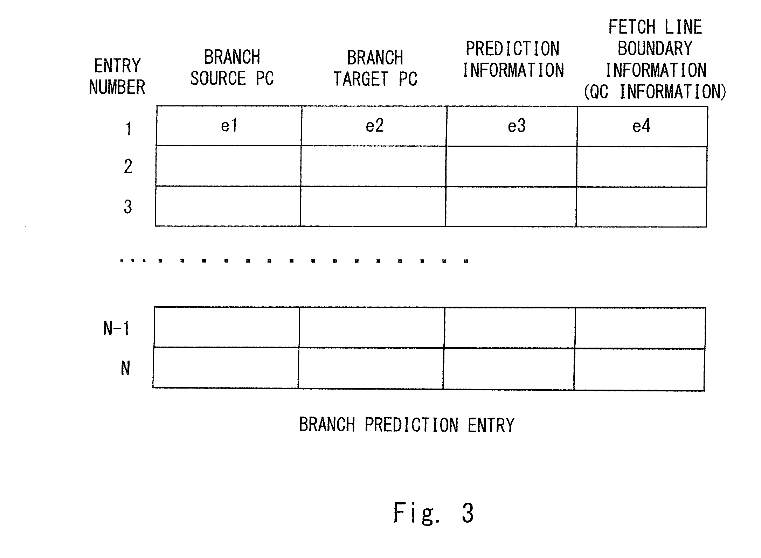

According to this embodiment, information indicating that a branch instruction crosses a fetch line (hereinafter also referred to as QC information or boundary information) is stored in a BTAC (Fig. 3). Based on this QC information, search of the BTAC is started after a former fetch line is fetched, preparing for acquisition of a branch target. At this time, due to an existence of the QC information, it is possible to fetch the branch target address after a latter fetch line is fetched. It is therefore possible to correctly decode the branch instruction even when the speed of searching the BTAC is increased, and to do away with a one cycle penalty.

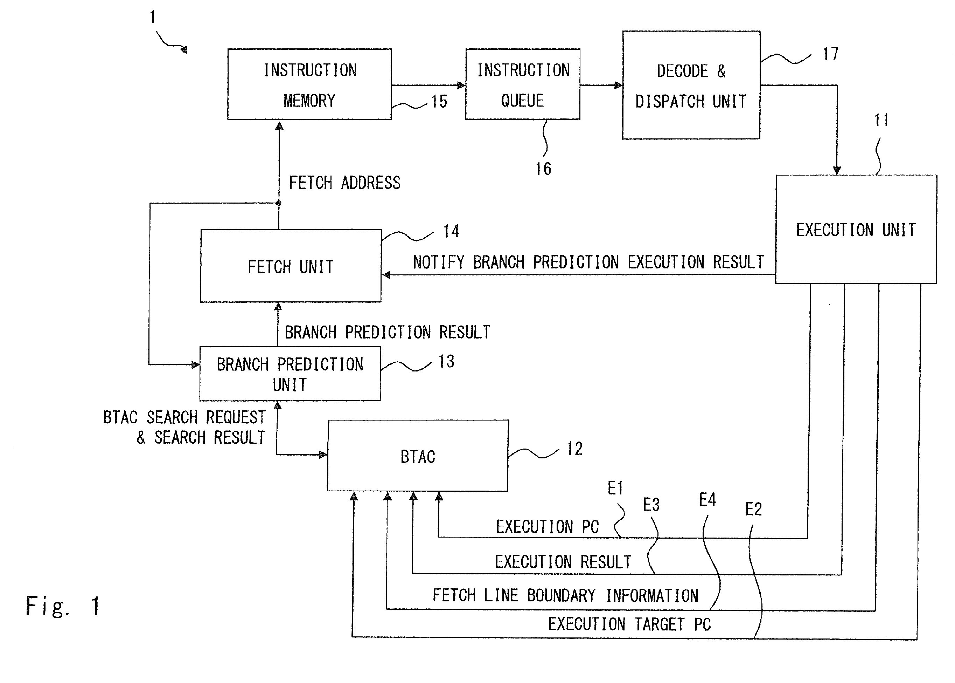

Fig. 1 is a diagram showing a processor 1 according to this embodiment. As shown in Fig. 1, the processor 1 includes an execution unit 11, a BTAC 12, a branch prediction unit 13, a fetch unit 14, an instruction memory 15, an instruction queue 16, and a decode and dispatch unit 17. The BTAC 12 includes a branch information table storing branch target information of a branch instruction and boundary information indicating that the branch instruction is on a fetch line boundary. The branch prediction unit 13 refers to the BTAC 12 to perform branch prediction of a variable-length instruction set including the branch instruction. The fetch unit 14 fetches an instruction based on a result of the branch prediction of the branch prediction unit 13. In short, the fetch unit 14 passes a PC of the instruction to be read out to the instruction memory 15.

The instruction memory 15 converts the value of the PC fetched by the fetch unit 14 into an address, reads out the instruction of this address, and outputs the instruction to the instruction queue 16. The instruction queue 16 temporarily stores the instruction. The decode and dispatch unit 17 decodes a group of instructions output from the instruction queue 16, interprets which instructions can be processed in parallel, for example, and passes the results to the execution unit 11. The execution unit 11 executes the instruction and notifies the fetch unit 14 of a branch prediction execution result. The execution unit 11 further outputs an execution PC E1, an execution target PC E2, an execution result E3, and a fetch line boundary information E4 to the BTAC 12. The BTAC 12 updates the branch information table based on these information output from the execution unit 11.

The branch prediction unit 13 according to this embodiment refers to the BTAC 12, and when the boundary information is present in the instruction to be fetched by the fetch unit 14, makes the fetch unit 14 fetch the following next fetch line as well and then makes the fetch unit 14 fetch the branch prediction target according to the branch target information.

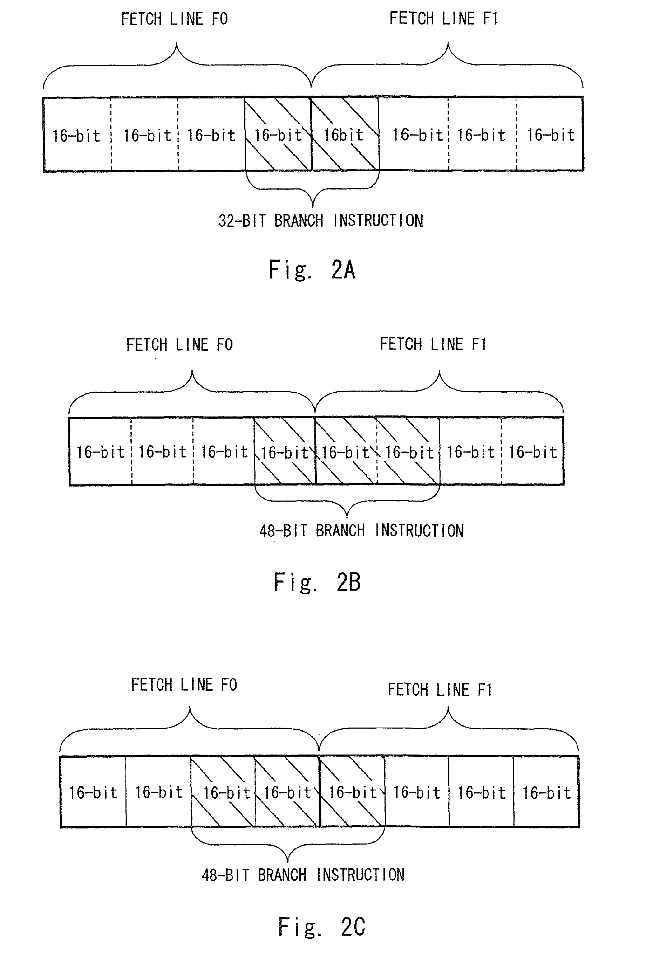

First, description will be made on a case in which a branch instruction is on a fetch line boundary. Fig. 2 is a diagram showing a case in which a branch instruction is present on a fetch line boundary. In Figs. 2A, 2B, and 2C, a case will be described in which a minimum unit of the instruction is 16 bits and four 16-bit data form one fetch line. One fetch line is an instruction to be fetched in one fetch. In summary, the instruction is fetched by each fetch line.

Fig. 2A shows a case in which a 32-bit branch instruction extends over a fetch line F0 and a fetch line F1. Fig. 2B shows a case in which a 48-bit branch instruction extends over a fetch line F0 and a fetch line F1. Fig. 2C also shows a case in which a 48-bit branch instruction extends over a fetch line F0 and a fetch line F1. In short, each of the drawings shows a case in which a branch instruction is present on the boundary of the fetch lines F0 and F1. When there are such branch instructions, only fetching the fetch lines F0 is not enough to correctly decode the branch instructions. In this case, it is definitely required to fetch the fetch lines F1 as well.

Fig. 3 is a diagram showing the BTAC 12 (branch information table). The BTAC 12 according to this embodiment registers QC information e4 in addition to a branch source PC (e1), a branch target PC (e2), and prediction information e3. The branch source PC (e1) is information obtained from the execution PC E1 transmitted from the execution unit 11, and indicates an address at which the branch instruction starts. The branch target PC e2 is information obtained from the execution target PC E2. When the execution result E2 indicates a successful branch instruction, the execution target PC E2 is registered as the branch target PC e2. The prediction information e3 is to register whether the execution result E3 is established, and may be either one-bit data only indicating whether the result is established or not or multibit information to indicate the number of times the result is successively established, as will be described below. The QC information e4 is registered based on the fetch line boundary information E4. Since it is impossible to determine whether an instruction is a branch instruction unless it is decoded, it is possible to determine from the result E4 of the execution unit 11 whether the instruction is a branch instruction and the instruction is present on the fetch line boundary.

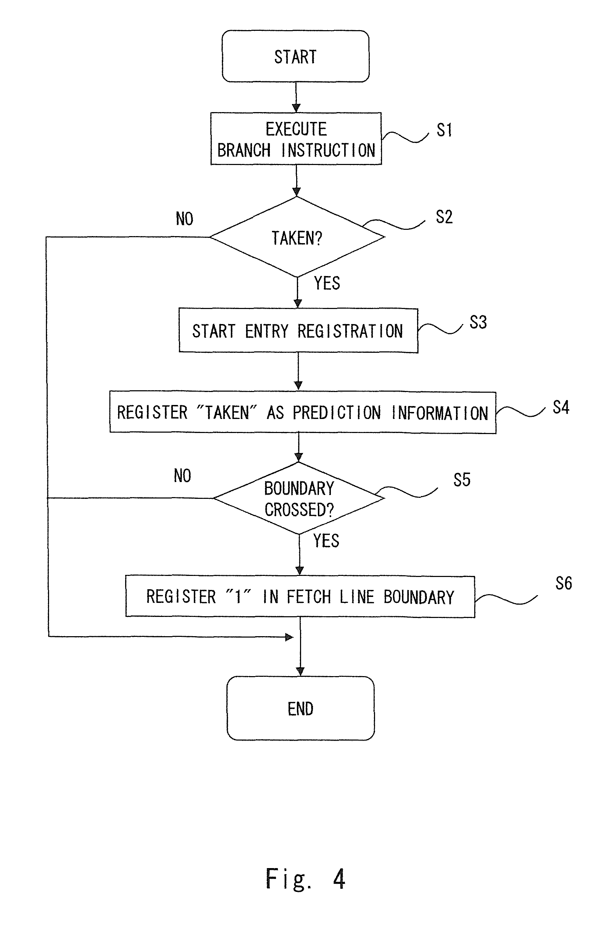

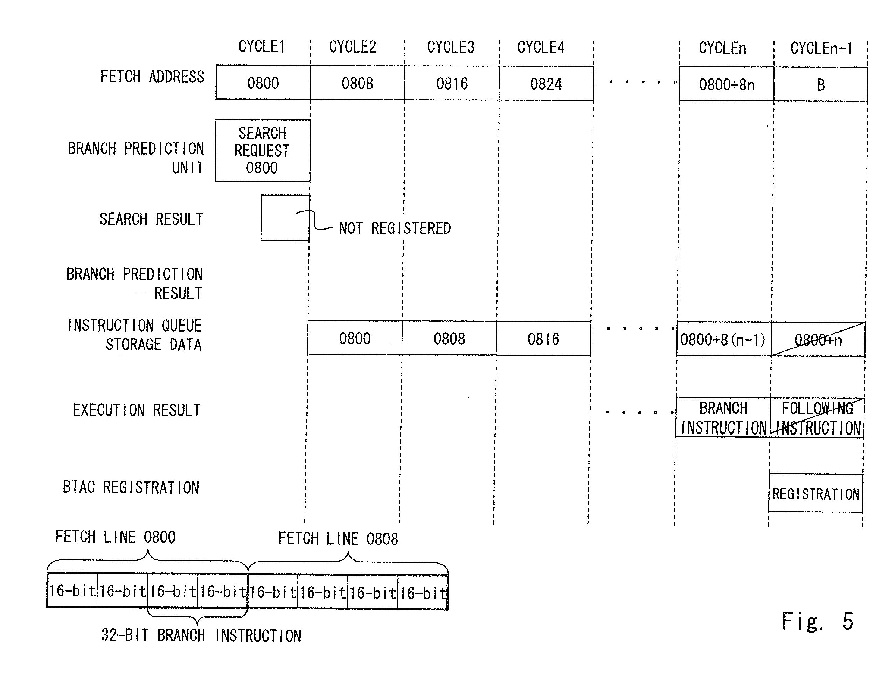

Next, a method of registering the processor 1 in the BTAC 12 according to this embodiment will be described. Fig. 4 is a flowchart showing a method of registering information in the BTAC 12. Fig. 5 further shows an operation of the processor 1 when an instruction is fetched, executed, and then registered in the BTAC 12 at cycles 1 to n+1. Fig. 5 shows an operation of processing two fetch lines of a fetch line 0800 and the following fetch line 0808, and shows an operation of a case in which a branch instruction is included in the fetch line 0800.

An address of the fetch line 0800 including the branch instruction is output to the instruction memory 15 from the fetch unit 14. A group of instructions read out from the instruction memory 15 are once stored in the instruction queue 16. The decode and dispatch unit 17 reads instructions from the instruction queue 16 to perform decoding. The decode and dispatch unit 17 further performs dispatch from the decoding result, and passes the result to the execution unit 11.

If it is turned out as a result of decoding that the instruction is present on a fetch line boundary, the decode and dispatch unit 17 also transfers information indicating it to the execution unit. The execution unit 11 executes instructions based on the information transmitted from the decode and dispatch unit 17. The execution unit 11 executes the branch instruction (Step S1), and when the branch is taken (Step S2: Yes), the execution result is sent to the BTAC 12 and is stored in the BTAC 12 (Step S3 to S6).

At this time, the prediction information e3 is registered based on the execution result E3 and the execution PC of the branch instruction (Step S4), and the branch target Pc e3 is registered based on the execution result E3. The fetch line boundary information E4 detected at the time of decoding and passed to the execution unit 11 from the decode and dispatch unit 17 is also transmitted to the BTAC 12 as well, and the QC information e4 is also registered in the BTAC 12 based on the fetch line boundary information E4. In short, when the branch instruction crosses a fetch line boundary (Step S5: Yes), 1 is stored as the QC information.

In Fig. 5, when the fetch unit 14 fetches the address 0800 at a cycle 1, the fetch address 0800 is notified to the branch prediction unit 13, the instruction memory 15, and the execution unit 11. Based on this, the branch prediction unit 13 searches the BTAC 12 for the fetch address 0800. It is assumed here that the fetch address 0800 is not registered in the BTAC 12.

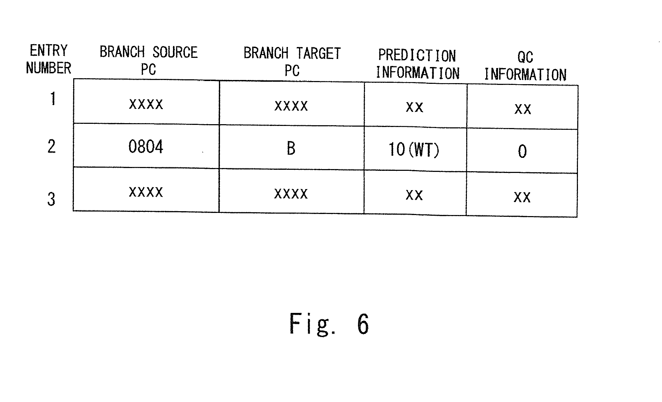

The branch prediction unit 13 therefore cannot perform branch prediction and sends no data to the fetch unit 14. The fetch unit 14 then sequentially fetches fetch lines as per the address. At a cycle n, the execution unit 11 executes the instruction of the fetch line 0800. Since branch occurs as a result of the execution, the following instructions are discarded. Data is registered in the BTAC 12 based on this execution result, as shown in Fig. 6. In this example, 0804 is registered as the branch source PC, B is registered as the branch target PC, "10" is registered as the prediction information, and "0" is registered as the QC information in the entry number 2. Stored as the branch source PC is the value of the PC indicating not just the fetch line at which the branch instruction is present but also where in the fetch line the branch instruction is present.

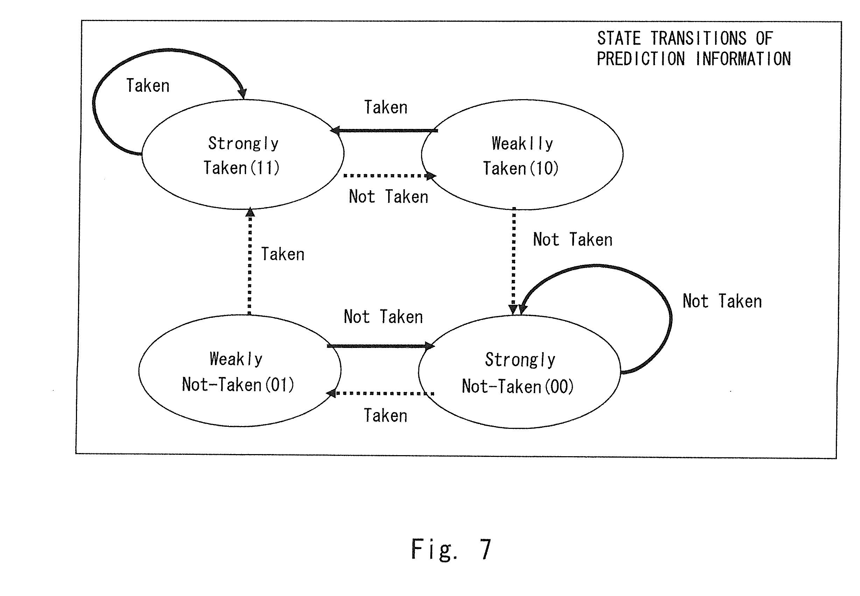

Next, prediction information state transitions in a case in which the prediction information is stored in two bits as shown in Fig. 6 will be described. Fig. 7 is a diagram showing one example of state transitions of the prediction information. As shown in Fig. 7, a prediction state according to this embodiment includes four states: Strongly Taken (11), Weakly Taken (10), Strongly Not-Taken (00), and Weakly Not-Taken (01).

### In the case of Strongly Taken (11)

When the executed branch instruction is Taken, i.e., a prediction hit, the state of Strongly Taken (11) is maintained. When the executed branch instruction is Not Taken, i.e., a prediction miss, a transition is made to Weakly Taken (10).

### In the case of Weakly Taken (10)

When the executed branch instruction is Taken (prediction hit), a transition is made to Strongly Taken (11). When the executed branch instruction is Not Taken (prediction miss), a transition is made to Strongly Not-Taken (00).

### In the case of Weakly Not-Taken (01)

When the executed branch instruction is Taken (prediction hit), a transition is made to Strongly Taken (11). When the executed branch instruction is Not Taken (prediction miss), a transition is made to Strongly Not-Taken (00).

### In the case of Strongly Not-Taken (00)

When the executed branch instruction is Taken (prediction hit), a transition is made to Weakly Not-Taken (01). When the executed branch instruction is Not Taken (prediction miss), the state of Strongly Not-Taken (00) is maintained.

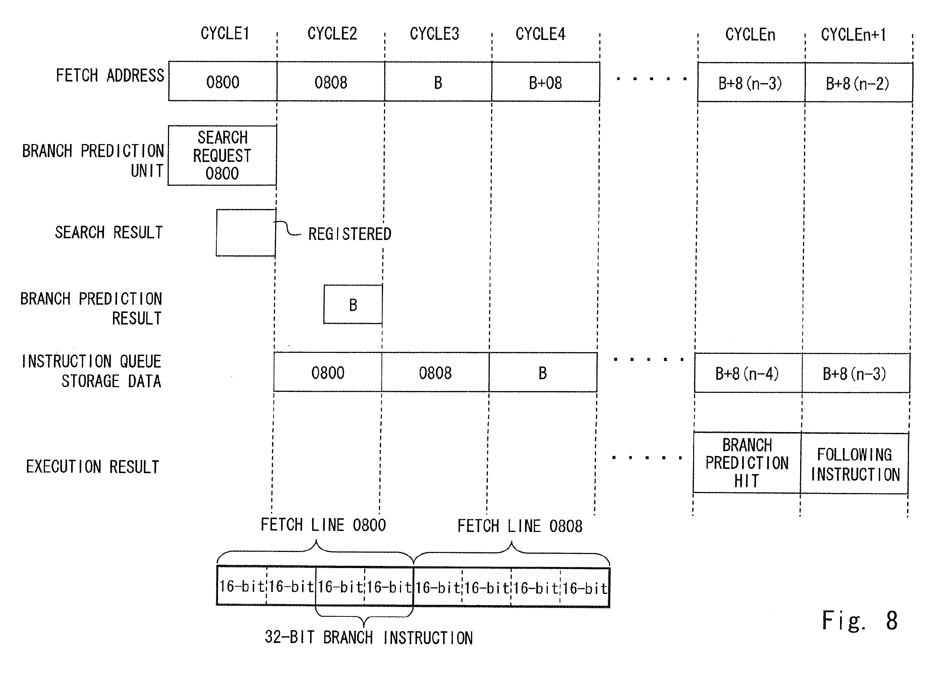

Next, an operation of the processor 1 according to this embodiment will be described. Fig. 8 is a diagram showing an operation of a case in which there is registration in the BTAC 12 and the branch prediction is hit. Fig. 8 shows a case in which the branch instruction is on the fetch line 0800, not on the fetch line boundary.

When the fetch unit 14 fetches an instruction, this fetch address is also input to the branch prediction unit 13. The branch prediction unit 13 outputs to the BTAC 12 a search request to examine whether the address fetched by the fetch unit 14 is registered in the BTAC 12. The BTAC 12 sends back the branch target information and the execution history corresponding to the searched address 0800, and the QC information indicating whether the instruction is present in the fetch line boundary to the branch prediction unit 13 as a search result. At this time, when the searched address 0800 is registered in the BTAC 12 and the branch instruction of this address was previously taken as well, i.e., when the prediction information is Strongly Taken (11) or Weakly Taken (10), the branch prediction unit 13 outputs the prediction target PC which is the prediction branch target address to the fetch unit 14 as a prediction result.

Shown here is an example in which the search request of the fetch address 0800 is issued and the search result is sent back at a cycle 1, and the branch prediction unit 13 outputs an address B as the branch prediction result at a cycle 2. According to this, the fetch unit 14 fetches the address B at a cycle 3. After that, at a cycle n, the execution unit 11 executes a branch instruction of the fetch line 0800. Shown in this example is a case in which the branch prediction is hit and the instructions subsequent to the branch target address B are successively executed after a cycle n+1 as well.

If the branch prediction is not performed, the fetch address of the branch target needs to wait for the execution result of the branch instruction. However, since the branch prediction unit 13 conducts a read-ahead, it is possible to fetch the fetch address of the branch target without waiting for the execution result of the branch instruction. In the example shown in Fig. 7, when the prediction result is not established twice in succession and the prediction information becomes Strongly Not-taken (00), it may be deleted from the entry. Alternatively, such a configuration may be employed in which the branch prediction is not performed in the case of Weakly Taken (10) or the branch prediction is performed in the case of Weakly Not-taken (01).

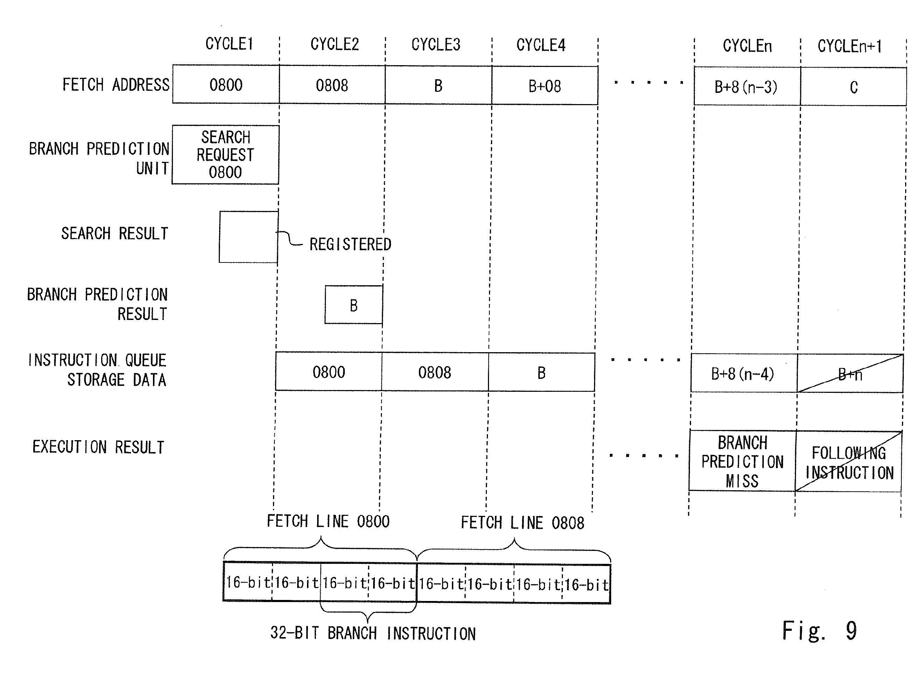

Fig. 9 is a diagram showing an operation of a case in which there is registration in the BTAC 12 and the branch prediction is missed. Fig. 9 shows a case in which the branch instruction is present on the fetch line 0800, not on the fetch line boundary, as is similar to Fig. 8.

As shown in Fig. 9, when the search request is issued to the BTAC 12 at a cycle 1, the branch target PC (e2) is transmitted from the BTAC 12 and the BTAC 12 outputs the fetch address B as a prediction result at a cycle 2. The fetch unit 14 then fetches the address B at a cycle 3. Shown in Fig. 9, however, is a case in which, when the execution unit 11 executes the branch instruction of the fetch line 0800 at a cycle n, the branch instruction is not executed as predicted in the branch prediction. In this case, the execution unit 11 discards the instructions fetched by the fetch unit 14 after the branch prediction is missed after a cycle n+1. The aforementioned operation in a case in which the branch instruction is not present on the fetch address boundary is similar to that in the related operation.

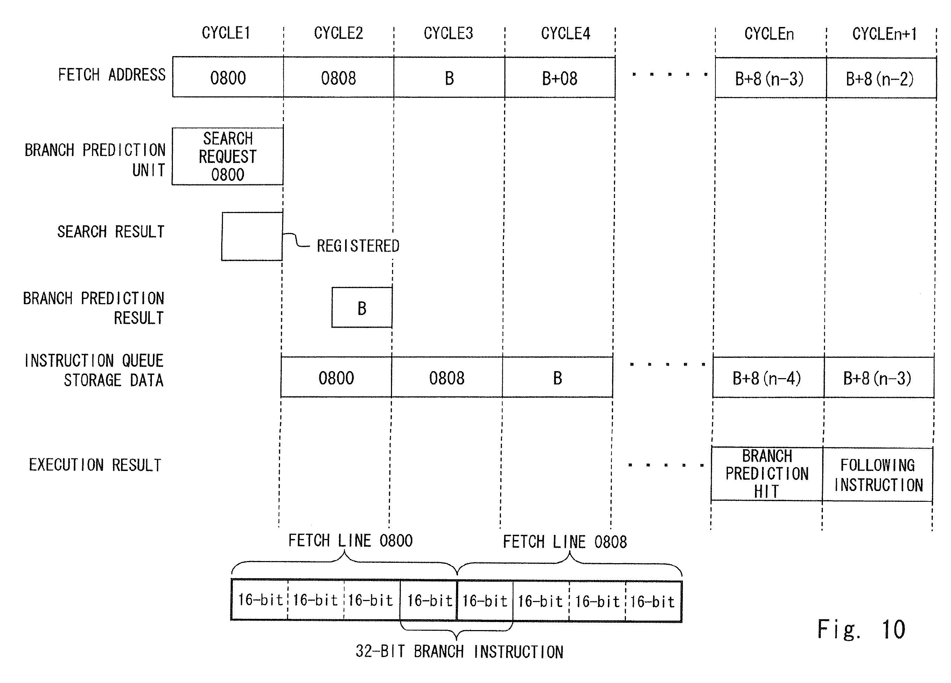

Next, Fig. 10 is a diagram showing an operation of a case in which there is registration in the BTAC 12, the QC information is included, and the branch instruction is present on a fetch line. As shown in Fig. 10, when the branch prediction unit 13 issues a search request of the address 0800 to the BTAC 12 at a cycle 1, information is notified indicating that there is registration as the search result, i.e., the branch target address B. The branch prediction unit 13 outputs the address B to the fetch unit 14 as a branch prediction result at a cycle 2. The fetch unit 14 then fetches the address B at a cycle 3. When the execution unit 11 executes the branch instruction at a cycle n and the branch prediction is hit, it is possible to execute instructions fetched by the fetch unit 14 after a cycle n+1 as well.

As described above, if there is no registration in the BTAC 12, when it is turned out that the branch instruction is present on the fetch line boundary at the time of decoding in the decode and dispatch unit 17 and further the branch instruction is taken at the execution unit 11, the fetch line boundary information E4, the execution result E3 and the like are transmitted to the BTAC 12, and these information are newly registered in the BTAC 12 or the prediction information is updated.

Next, effects of this embodiment will be described. Fig. 17 is a diagram showing a case in which the branch instruction extends over fetch lines 0800 and 0808, and the branch prediction is associated with the fetch line 0800. When the fetch address 0800 is fetched at a cycle 1, the branch prediction unit 13 outputs a request to search the BTAC 12. The BTAC 12 outputs a search result indicating that there is registration, and the branch prediction unit 13 outputs the fetch line B to the fetch unit 14 as a branch prediction result at the cycle 1.

In this case, the fetch unit 14 fetches the fetch line B at a cycle 2. The decode and dispatch unit 17 sequentially decodes the fetch line 0800 and the fetch line B. Meanwhile, since the branch instruction extends over the fetch lines 0800 and 0808, the rest of the parts of the branch instruction present at the fetch line 0808 have not been read out and it is impossible to correctly decode the branch instruction.

In order to avoid such a situation, according to a related art, the branch instruction is associated with the fetch line 0808 which is the latter part of the branch instruction. Fig. 18 is a diagram showing a case in which the branch instruction extends over the fetch lines 0800 and 0808, and the branch prediction is associated with the branch instruction that is present at the fetch line 0808.

In this case, when the fetch line 0808 is fetched, the branch prediction unit 13 makes a search request to the branch prediction unit 13. The search result that is sent back indicates that there is registration, and at a cycle 3, the branch prediction unit 13 outputs the fetch address B to the fetch unit 14 as a branch prediction result. Upon receiving this result, the fetch unit 14 fetches the fetch address B at a cycle 4. As will be understood, according to a related art, there is no QC information, and it is impossible to carry out a branch prediction at the fetch line 0800. Accordingly, the timing of the branch prediction is delayed by one cycle. The fetch address B is fetched at the cycle 3 in this embodiment, whereas in the related art, the following fetch address 0816 is fetched at the cycle 3, and the fetch address of the branch target has not been fetched. In the example shown in Fig. 18, the fetch address B is fetched at a cycle 4.

Meanwhile, according to this embodiment, it is possible to search the BTAC 12 in the stage where the former fetch line is fetched, thereby being able to eliminate a one cycle penalty occurred in the related art as shown in Fig. 18. Further, since the QC information indicating that a branch instruction is on a fetch line boundary is included, it is possible to determine whether the branch instruction is on the fetch line boundary even when the branch prediction information is associated with the former fetch line. It is therefore possible to avoid a situation in which the branch prediction target is fetched without fetching the latter fetch line as shown in Fig. 17 and the latter part of the instruction cannot be read out.

Next, a second embodiment of the present invention will be described. It is assumed in this embodiment that the search result for the request to search the BTAC 12 is obtained in the same cycle. Further, a case will be described in which the branch prediction is performed when the former fetch line is fetched, as is similar to the first embodiment, even when the branch instruction is present on the fetch line boundary.

Consider a case in which it is possible to search the BTAC 12 at a high speed, i.e., a case in which searching of the BTAC 12 is started by the branch prediction and at the same cycle, the branch prediction unit 13 can receive a response of all prediction information from the BTAC 12 as in this embodiment. In such a case, if there is a branch instruction on the fetch line boundary in the variable-length instruction set, as shown in Fig. 17, the branch prediction target is fetched without fetching the latter fetch line, and the branch instruction cannot be correctly decoded. According to this embodiment, even in such a case, it is possible to avoid such a problem since the fetch line boundary information (QC information) is included.

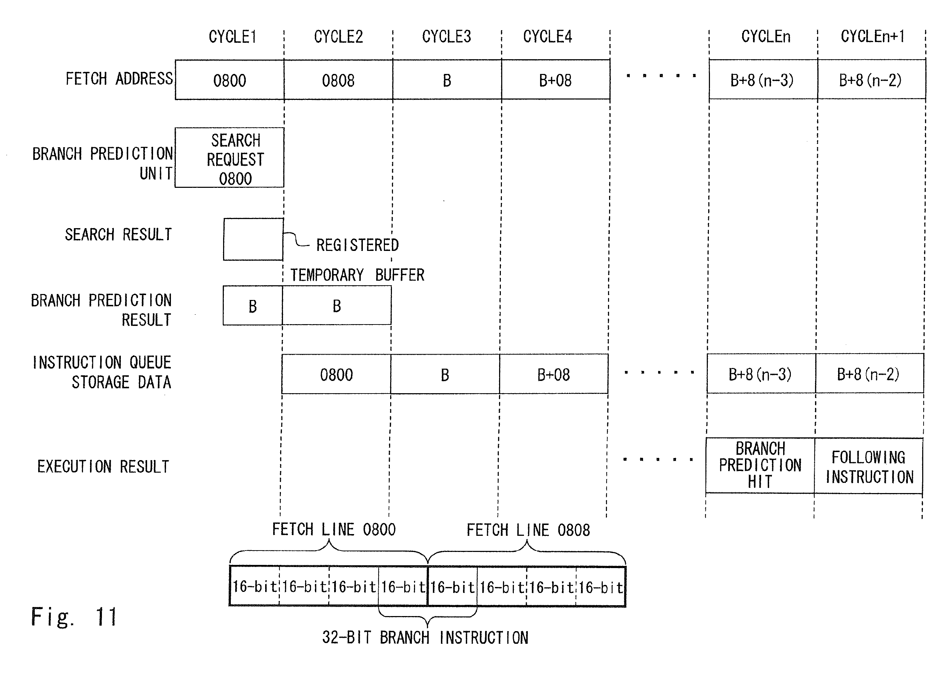

Fig. 11 is a diagram showing an operation of a case in which a branch instruction is present on a fetch line boundary (the fetch line 0800 and the fetch line 0808) and it is possible to search the BTAC 12 at a high speed. As shown in Fig. 11, when the fetch line 0800 is fetched at a cycle 1, the branch prediction unit 13 requests the BTAC 12 to search for the fetch line 0800. The BTAC 12 then outputs a search result to the branch prediction unit 13 at the same cycle. In this case, the branch prediction unit 13 is able to output the fetch line B to the fetch unit 14 as a branch prediction target address at the same cycle, which is the cycle 1. In this case, however, the fetch unit 14 fetches the branch target fetch line B without fetching the fetch line 0808 at a next cycle 2.

Meanwhile, according to this embodiment, the QC information is also input to the branch prediction unit 13 as a search result, which helps to determine that the fetch unit 14 is required to fetch the following fetch line 0808 at the next cycle 2. Accordingly, the branch prediction unit 13 temporarily stores the fetch address B in a temporary buffer or the like included therein, for example. The branch prediction unit 13 then passes the fetch address B to the fetch unit 14 at a cycle 2. The fetch unit 14 then fetches the fetch address B at a cycle 3.

Typically, the branch prediction unit 13 tries to perform branch prediction for each cycle at which the fetch unit 14 outputs a fetch address. Meanwhile, according to this embodiment, QC information is supplied from the BTAC 12 as a search result. When the QC information indicates that the branch instruction is present on a fetch line boundary, the branch prediction unit 13 temporarily stops the branch prediction even when the fetch address is input, passes the branch prediction result to the fetch line unit 14 at a predetermined timing, to re-start the branch prediction.

In this embodiment, the fetch line boundary information (QC information) is held, as is similar to the first embodiment. Since the QC information is held, it is possible to select which of the fetch line of the branch prediction target or the latter fetch line where the latter part of the branch instruction is present will be fetched in the next fetch. It is therefore possible to avoid such a situation in which the latter part of the branch instruction is skipped even when the branch prediction is associated with the former part of the branch instruction, thereby being able to correctly decode the branch instruction.

Needless to say, the present invention is not limited to the above exemplary embodiments, but can be modified in various manners without departing from the spirit of the present invention.

This application is based upon and claims the benefit of priority from Japanese Patent Application No. 2011-078561, filed on March 31, 2011, the disclosure of which is incorporated herein in its entirety by reference.

### Reference Signs List

- 1: PROCESSOR
- 11: EXECUTION UNIT
- 12: BTAC
- 13: BRANCH PREDICTION UNIT
- 14: FETCH UNIT
- 15: INSTRUCTION MEMORY
- 16: INSTRUCTION QUEUE
- 17: DECODE AND DISPATCH UNIT
- e1: BRANCH SOURCE PC
- e2: BRANCH DESTINATION PC
- e3: PREDICTION INFORMATION
- e4: QC INFORMATION
- E1: EXECUTION PC
- E2: EXECUTION DESTINATION PC
- E3: EXECUTION RESULT
- E4: FETCH LINE BOUNDARY INFORMATION

## Claims

1. A processor that executes a variable-length instruction set including a branch instruction, comprising:
a branch information table that stores branch target information of a branch instruction and boundary information indicating that the branch instruction is on a fetch line boundary;
a branch prediction unit that performs branch prediction of a variable-length instruction set including the branch instruction by refering to the branch information table; and
a fetch unit that fetches an instruction based on a result of the branch prediction,
wherein the branch prediction unit refers to the branch information table, and when the instruction fetched by the fetch unit includes the boundary information, the branch prediction unit makes the fetch unit fetch the following next fetch line as well and then makes the fetch unit fetch a branch prediction target instruction according to the branch target information.

2. The processor according to Claim 1, further comprising a buffer that temporarily stores branch target information of the branch instruction on a fetch line boundary in a case where search of the branch information table and acquisition of the branch target information can be performed at the same cycle,
wherein the branch prediction unit refers to the branch information table, and in a case where an instruction fetched by the fetch unit includes the boundary information, holds the branch target information until when the fetch unit fetches the following next fetch line.

3. The processor according to Claim 1 or 2, wherein the branch information table includes a branch source address of a branch instruction, a branch target address, prediction information indicating whether a branch processing has actually been executed, and the boundary information.

4. The processor according to any one of Claims 1 to 3, wherein the branch instruction is a conditional branch instruction and the conditional branch instruction separates only when a predetermined condition is satisfied.

5. The processor according to Claim 3, comprising:
an instruction memory that outputs an instruction fetched by the fetch unit;
a decode unit that decodes a group of instructions read out from the instruction memory; and
an execution unit that executes decoded instructions,
wherein the branch information table is updated based on information including an execution address, an execution result, an execution target address, and fetch line boundary information output from the execution unit.

6. An instruction processing method of a processor that executes a variable-length instruction set including a branch instruction, the method comprising:
a branch prediction process that performs branch prediction of variable-length instruction set including branch instruction by referring to a branch information table, the branch information table storing branch target information of the branch instruction and boundary information indicating that the branch instruction is on a fetch line boundary; and
a fetch process that fetches an instruction based on a result of the branch prediction,
wherein in the branch prediction process, the branch information table is referred, and when the instruction fetched at the fetch process includes the boundary information, the following next fetch line is also fetched and then a branch prediction target instruction is fetched according to the branch target information.
